# EUROPÄISCHE PATENTSCHRIFT

(11) **EP 1 542 328 B1**
(45) Veröffentlichungstag und Bekanntmachung des Hinweises auf die Patenterteilung: **14.07.2010**
(21) Anmeldenummer: 04027945.7
(22) Anmeldetag: 25.11.2004
(51) Int. Cl.: H02G 3/14

(54) **Kassettendeckel**
Cassette cover
Couvercle de cassette

(30) Priorität: 11.12.2003 DE 20319362 U
(43) Veröffentlichungstag der Anmeldung: 15.06.2005
(73) Patentinhaber: OBO Bettermann GmbH & Co. KG, 58710 Menden (DE)
(72) Erfinder: Hütt, Christoph, 51645 Gummersbach (DE); Kaulke, Lothar, 51645 Gummersbach (DE)
(74) Vertreter: Patentanwälte Ruff, Wilhelm, Beier, Dauster & Partner

(56) Entgegenhaltungen:
- DE-A1- 2 840 673
- DE-C1- 19 545 983
- GB-A- 1 339 480
- US-A1- 2003 106 701

## Beschreibung

Die Erfindung betrifft einen Kassettendeckel für eine Unterflurzugdose oder eine Unterflurgerätedose für die Anordnung von Installationsgeräten, wobei der Kassettendeckel eine Basisplatte aufweist, wobei die Basisplatte des Kassettendeckels auf einer dem Geräteeinsatz oder der Unterflurdose zugewandten Unterseite mit wenigstens einer Versteifungsrippe versehen ist.

Aus dem deutschen Gebrauchsmuster DE 297 18 202 U1 ist ein gattungsgemäßer Kassettendeckel für eine Dose eines Unterflur-Elektroinstallationskanals bekannt. Der Kassettendeckel ist in einem geeigneten Rahmen gelagert und in den Kassettendeckel wird ein Stück Bodenbelag eingelegt, beispielsweise Stein, Fliese oder Teppichboden.

Aus dem deutschen Gebrauchsmuster DE 201 17 522 U1 ist ein Geräteeinsatz mit einem Kassettenrahmen und einem auf den Kassettenrahmen aufsetzbaren Kassettendeckel bekannt. Der Kassettendeckel ist mit einem Schnurauslass versehen und in den Kassettendeckel kann ein Stück Bodenbelag eingelegt werden.

Werden derartige gattungsgemäße Kassettendeckel stark belastet, beispielsweise beim Einsatz in Autohäusern oder im Industriebereich, führt dies zwar nicht notwendigerweise zu einer Zerstörung des Kassettendeckels, wohl aber zu einer Zerstörung des in den Kassettendeckel eingelegten Bodenbelags. Dies ist speziell bei nicht elastischen Bodenbelägen wie z.B. Estrich, Naturstein oder Fliesen, zu beobachten.

Aus der US-Offenlegungsschrift US 2003/0 106 701 A1 ist eine Unterflur-Anschlussdose mit einem Gehäuse und einer Klappenanordnung bekannt. Die Klappenanordnung weist eine Klappe auf, die an ihrer dem Gehäuse zugewandten Unterseite Versteifungsrippen aufweist.

Aus der britischen Patentschrift GB 1 339 480 ist eine Unterfluranschlussdose bekannt, die ein Oberteil aufweist, in dem eine klappbare Klappe angeordnet ist. Die Klappe ist an ihrer dem Oberteil zugewandten Unterseite mit Rippen versehen.

In der deutschen Patentschrift DE 195 45 983 C1 ist eine Kanalabdeckung mit Schachtdeckeln beschrieben. Die Schachtdeckel sind an ihrer Unterseite zur Versteifung der Schachtdeckel mit Längsrippen und Querrippen versehen.

In der deutschen Offenlegungsschrift DE 28 40 673 A1 ist eine Abdeckvorrichtung für Schächte beschrieben. An einer Oberkante des Schachts ist in einen Boden ein Rahmen eingelassen, an dem ein Klappdeckel schwenkbar befestigt ist. Um den Klappdeckel zu versteifen, sind an der dem Schacht zugewandten Unterseite des Klappdeckels Rippen vorgesehen.

Mit der Erfindung soll ein einfach herzustellender, hochbelastbarer Kassettendeckel geschaffen werden.

Erfindungsgemäß ist hierzu ein Kassettendeckel für eine Unterflurzugdose oder eine Unterflurgerätedose für die Anordnung von Installationsgeräten vorgesehen, wobei der Kassettendeckel eine Basisplatte aufweist, bei dem die Basisplatte des Kassettendeckels auf einer dem Geräteeinsatz zugewandten Unterseite mit wenigstens einer Versteifungsrippe versehen ist, wobei die Basisplatte mit Vorsprüngen und/oder Ausnehmungen versehen ist, die mit passenden Ausnehmungen und/oder Vorsprüngen der wenigstens einen Versteifungsrippe eingreifen.

Durch Vorsehen wenigstens einer Versteifungsrippe wird eine Durchbiegung des Kassettendeckels bei hoher Belastung verhindert. Dennoch bleibt der Kassettendeckel aufgrund einer vergleichsweise geringen Gewichtszunahme noch gut handhabbar. Durch Anbringen einer Versteifungsrippe können konventionelle Kassettendeckel in einfacher Weise für den Schwerlastbetrieb ausgerüstet werden. Dies erlaubt die kostensparende Verwendung von Gleichteilen in der Produktion. Beispielsweise sind die Basisplatte mit einem umlaufenden Rand und die wenigstens eine Versteifungsrippe als Blechteile ausgebildet und die Versteifungsrippe ist im Wesentlichen senkrecht zur Basisplatte angeordnet und beispielsweise mit dieser verschweißt.

Durch das Vorsehen von Ausnehmungen und von in die Ausnehmungen eingreifenden Vorsprüngen kann eine stabile und passgenaue Anbindung der Versteifungsrippe an die Basisplatte erfolgen. Speziell kann eine Basisplatte beispielsweise mit Vorsprüngen und/oder Ausnehmungen versehen sein und in Abhängigkeit einer zu erwartenden Belastung des Kassettendeckels kann dann eine Versteifungsrippe an der Basisplatte angeordnet werden.

In Weiterbildung der Erfindung ist die wenigstens eine Versteifungsrippe als Blechteil ausgebildet und an ihrer, der Basisplatte abgewandten freien Kante abgewinkelt.

Auf diese Weise kann eine erhöhte Versteifungswirkung der Versteifungsrippen erzielt werden und der Kassettendeckel kann auf den abgewinkelten Bereichen der Versteifungsrippen abgelegt werden. Die freie Kante der Versteifungsrippe ist dabei in einer Weise abgewinkelt, so dass entlang der Seitenkante wenigstens abschnittsweise ein abgewinkelter Verstärkungsstreifen ausgebildet ist. Beispielsweise lässt sich die Versteifungsrippe dadurch als Blechbiegeteil herstellen.

In Weiterbildung der Erfindung sind auf der Unterseite der Basisplatte wenigstens zwei sich kreuzende Versteifungsrippen angeordnet. Alternativ oder zusätzlich können auf der Unterseite des Kassettendeckels wenigstens zwei im Wesentlichen parallel zueinander ausgerichtete Versteifungsrippen angeordnet sein.

Die Anzahl und Anordnung der Versteifungsrippen auf der Unterseite der Basisplatte werden an die zu erwartende Belastung und an das verwendete Material für die Basisplatte angepasst.

In Weiterbildung der Erfindung ist der Kassettendeckel mit einem Schnurauslass versehen, der zwischen zwei, im Wesentlichen parallel zueinander ausgerichteten Versteifungsstreben angeordnet ist.

Auf diese Weise kann eine kompakte Anordnung geschaffen werden und trotz Vorsehen von Versteifungsrippen ist ein zentraler Schnurauslass im Kassettendeckel anbringbar.

In Weiterbildung der Erfindung sind die Basisplatte und die wenigstens eine Verstärkungsstrebe als Blechteile ausgebildet und die Basisplatte ist mit schlitzartigen Ausnehmungen versehen, in die Vorsprünge der wenigstens einen Versteifungsrippe eingreifen.

Bei Herstellung des Kassettendeckels als Blechteil erlauben diese Maßnahmen eine passgenaue und stabile Anbindung der Versteifungsrippe an die Basisplatte. Beispielsweise können die Vorsprünge der Versteifungsrippe von einer Unterseite der Basisplatte her in die schlitzartigen Ausnehmungen der Basisplatte eingeführt werden und auf der Oberseite der Basisplatte dann mit dieser verschweißt werden. Die Schweißnähte selbst liegen dann an der Oberseite der Basisplatte, die im fertig montierten Zustand dann von dem in den Kassettendeckel eingelegten Bodenbelag abgedeckt werden.

Weitere Merkmale und Vorteile der Erfindung ergeben sich aus den Ansprüchen und der folgenden Beschreibung bevorzugter Ausführungsformen im Zusammenhang mit den Zeichnungen. In den Zeichnungen zeigen:
- Fig. 1: eine perspektivische Ansicht von schräg unten eines erfin- dungsgemäßen Kassettendeckels gemäß einer ersten Ausfüh- rungsform,
- Fig. 2: eine perspektivische Ansicht von schräg oben des Kassetten- deckels der Fig. 1,
- Fig. 3: eine perspektivische Ansicht von schräg unten eines erfin- dungsgemäßen Kassettendeckels gemäß einer zweiten Aus- führungsform und
- Fig. 4: eine perspektivische Ansicht von schräg oben des Kassetten- deckels der Fig. 3.

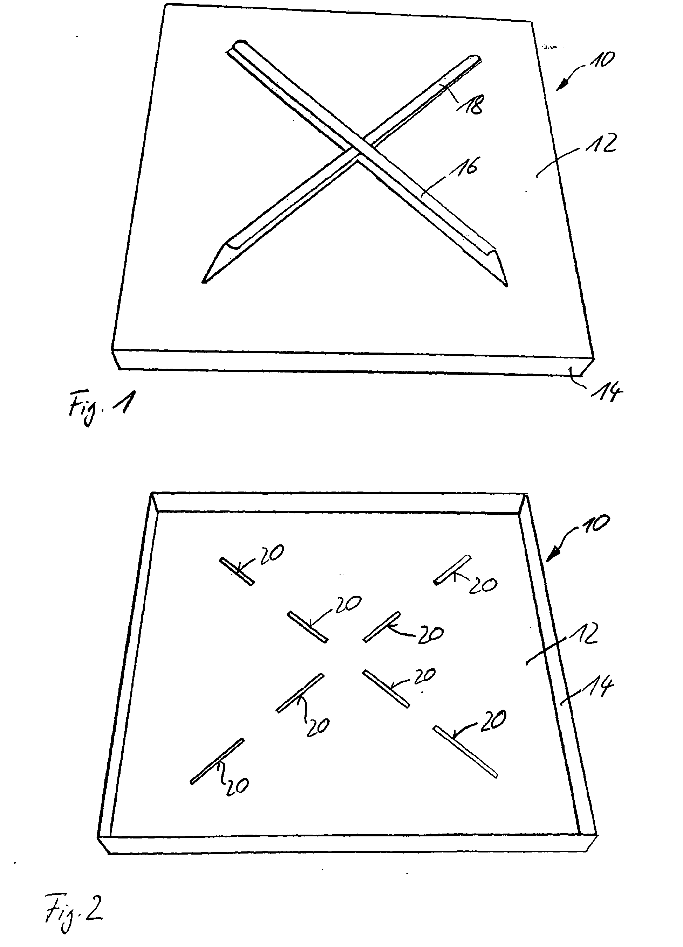

Fig. 1 zeigt einen Kassettendeckel 10 gemäß einer ersten bevorzugten Ausführungsform der Erfindung in einer Ansicht von schräg unten. Der Kassettendeckel 10 weist eine Basisplatte 12 und einen umlaufenden Rand 14 auf. Basisplatte 12 und umlaufender Rand 14 sind einstückig als Blechbiegeteil ausgebildet. Auf der Unterseite der Basisplatte 12, die in der Fig. 1 dem Betrachter zugewandt ist und die im eingebauten Zustand des Kassettendeckels einem Fußbodenbelag abgewandt ist, sind zwei Versteifungsrippen 16, 18 angeordnet. Beide Versteifungsrippen 16, 18 liegen jeweils auf einer Diagonale der quadratischen Basisplatte 12. Die Versteifungsrippen 16, 18 kreuzen sich in einem Winkel von 90° im Mittelpunkt der Basisplatte 12. Beide Versteifungsrippen 16, 18 sind als Blechbiegeteile ausgebildet und senkrecht zur Basisplatte 12 angeordnet. An ihrer jeweiligen, der Basisplatte 12 abgewandten freien Kante sind beide Versteifungsrippen 16, 18 abgewinkelt, so dass sich ein über die gesamte Länge der freien Kante erstreckender Verstärkungsstreifen gebildet ist. Die jeweiligen vorderen und hinteren Seitenkanten der Versteifungsrippen 16, 18 sind abgeschrägt und verlaufen infolgedessen nicht senkrecht zur Basisplatte 12 sondern um einen Winkel zu deren Mittelpunkt hin geneigt. Durch die abgewinkelten Verstärkungsstreifen an den freien Kanten der Versteifungsrippen 16, 18 wird zum einen eine Versteifungswirkung der Versteifungsrippen 16, 18 erhöht und darüber hinaus steht eine Auflagefläche zur Verfügung, auf der der Kassettendeckel 10 abgelegt werden kann. Dies ist aufgrund der Ausbildung der Versteifungsrippen 16, 18 als Blechteile von Bedeutung, da durch das Vorsehen der abgewinkelten Verstärkungsstreifen keine scharfen Kanten der Versteifungsrippen 16, 18 mehr auf einem Fußbodenbelag zu liegen kommen, wenn der Kassettendeckel 10 beispielsweise zu Wartungszwecken ausgebaut wird.

Die Ansicht der Fig. 2 zeigt den Kassettendeckel 10 von schräg oben. Zu erkennen ist, dass die Basisplatte 12 und der umlaufende Rand 14 eine trogartige Anordnung bilden, in der ein Bodenbelag aufgenommen werden kann. Die Basisplatte 12 ist mit mehreren schlitzartigen Ausnehmungen 20 versehen, in die leistenartige Vorsprünge der Versteifungsrippen 16, 18 eingesteckt sind. Die Versteifungsrippen 16, 18 sind dadurch bereits durch das einfache Einschieben ihrer Vorsprünge in die Ausnehmungen 20 in ihrer Lage auf der Unterseite der Basisplatte 12 fixiert. Die in die schlitzartigen Ausnehmung 20 hineinragenden Vorsprünge der Versteifungsrippen 16, 18 können dann von der in der Fig. 2 sichtbaren Oberseite der Basisplatte 12 mit dieser verschweißt werden. Da die in der Fig. 2 sichtbare Oberseite der Basisplatte 12 im montierten Zustand des Kassettendeckels 10 ohnehin von einem Abschnitt des Bodenbelags abgedeckt ist, kann dabei eine Nachbearbeitung der Schweißverbindung zwischen den Versteifungsrippen 16, 18 und der Basisplatte 12 im Bereich der schlitzartigen Ausnehmungen 20 unterbleiben.

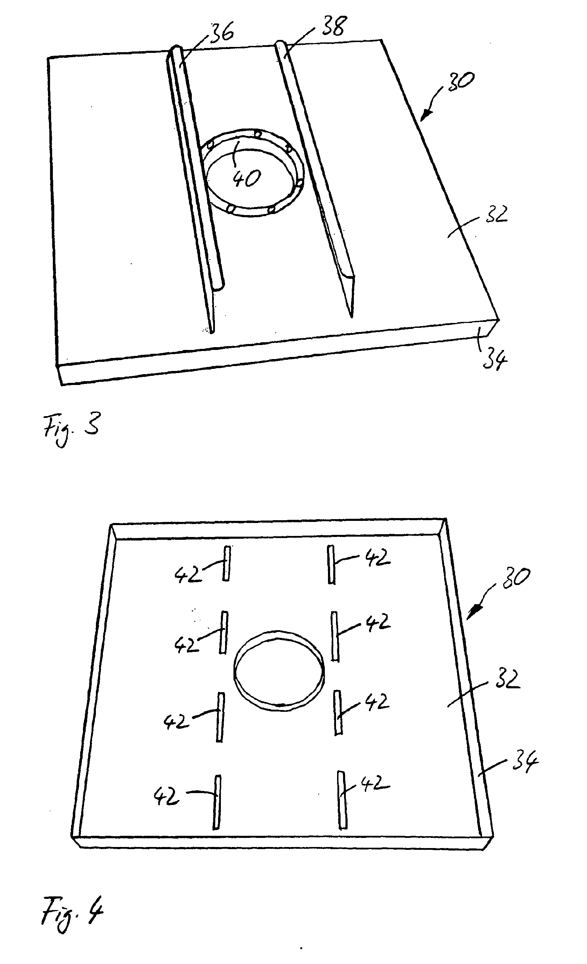

Die Darstellung der Fig. 3 zeigt einen Kassettendeckel 30 gemäß einer zweiten bevorzugten Ausführungsform der Erfindung in einer Ansicht von schräg unten. Der Kassettendeckel 30 weist eine Basisplatte 32 und einen umlaufenden Rand 34 auf. Auf einer, dem Betrachter in der Fig. 3 zugewandten Unterseite der Basisplatte 32 sind zwei Versteifungsrippen 36, 38 angeordnet, die parallel zueinander angeordnet sind. Die Versteifungsrippen 36, 38 sind auch parallel zu zwei gegenüberliegenden Seiten der Basisplatte 32 angeordnet und darüber hinaus symmetrisch zu einer Mittellinie der Basisplatte 32 angeordnet. Zwischen den Versteifungsrippen 36, 38 liegt ein Zwischenraum, in dem ein Gewindering 40 zur Montage eines Schnurauslasses angeordnet ist. Der Gewindering 40 umgibt den Mittelpunkt der quadratischen Basisplatte 32 und dient beispielsweise zum Anordnen eines tubusartigen Schnurauslasses, der von einer versenkten in eine ausgezogene Stellung verfahren werden kann.

Die Versteifungsrippen 36, 38 sind im Bereich ihrer, der Basisplatte 32 abgewandten freien Kante abgewinkelt, so dass zwei Verstärkungsstreifen ausgebildet sind, die sich jeweils über die gesamte Länge der freien Kante der Versteifungsrippen 36, 38 erstrecken.

In der Ansicht der Fig. 4 des in der Fig. 3 gezeigten Kassettendeckels 30 von schräg oben ist zu erkennen, dass die Basisplatte 32 mit mehreren schlitzartigen Ausnehmungen 42 versehen ist, in die Vorsprünge der Versteifungsrippen 36, 38 eingeführt werden. Nach dem Einführen der Vorsprünge können diese dann, wie anhand der Fig. 2 erläutert, mit der Basisplatte 32 verschweißt werden.

Die erfindungsgemäßen Kassettendeckel sind hoch belastbar und weisen speziell auch bei hoher Belastung eine gegenüber konventionellen Kassettendeckeln geringe Durchbiegung auf. Auch dann, wenn unelastische Bodenbeläge in den Kassettendeckeln 10, 30 angeordnet sind, beispielsweise Natursteinfliesen, führt eine hohe Belastung der Kassettendeckel nicht zu einem Brechen des Bodenbelags. Dennoch sind die erfindungsgemäßen Kassettendeckel 10, 30 gegenüber konventionellen Kassettendeckein unwesentlich schwerer, da lediglich das zusätzliche Gewicht der Versteifungsrippen 16, 18, 36, 38 zu berücksichtigen ist. Die erfindungsgemäßen Kassettendeckel 10, 30 für Schwerlastanwendungen können dabei durch einfaches Anbringen der Versteifungsrippen 16, 18, 36, 38 an im übrigen konventionellen Kassettendeckeln ausgebildet werden. Dies erlaubt die Verwendung von Gleichteilen von Kassettendeckeln für unterschiedliche Anwendungen.

## Patentansprüche

1. Kassettendeckel für eine Unterflurgerätedose oder eine Unterflurzugdose, wobei der Kassettendeckel eine Basisplatte (12; 32) aufweist und wobei die Basisplatte (12; 32) des Kassettendeckels auf einer dem Geräteeinsatz oder der Unterflurdose zugewandten Unterseite mit wenigstens einer Versteifungsrippe (16, 18; 36, 38) versehen ist, **dadurch gekennzeichnet, dass** die Basisplatte (12, 32) mit Vorsprüngen und/oder Ausnehmungen (20) versehen ist, die mit passenden Ausnehmungen und/oder Vorsprüngen der wenigstens einen Versteifungsrippe (16, 18; 36, 38) eingreifen.

2. Kassettendeckel nach Anspruch 1, **dadurch gekennzeichnet, dass** die wenigstens eine Versteifungsrippe (16, 18; 36, 38) als Blechteil ausgebildet ist und an ihrer, der Basisplatte (12; 32) abgewandten freien Kante abgewinkelt ist.

3. Kassettendeckel nach einem der vorstehenden Ansprüche, **dadurch gekennzeichnet, dass** auf der Unterseite der Basisplatte (12) wenigstens zwei sich kreuzende Versteifungsrippen (16, 18) angeordnet sind.

4. Kassettendeckel nach einem der vorstehenden Ansprüche, **dadurch gekennzeichnet, dass** auf der Unterseite der Basisplatte (32) wenigstens zwei im wesentlichen parallel zueinander ausgerichtete Versteifungsrippen (36, 38) angeordnet sind.

5. Kassettendeckel nach Anspruch 4, **dadurch gekennzeichnet, dass** ein Schnurauslass vorgesehen ist, der zwischen den beiden, im wesentlichen parallel zueinander ausgerichteten Versteifungsrippen (36, 38) angeordnet ist.

6. Kassettendeckel nach einem der Ansprüche 1 bis 5, **dadurch gekennzeichnet, dass** die Basisplatte (12; 32) und die wenigstens eine Verstärkungstrebe (16, 18; 36, 38) als Blechteile ausgebildet sind und die Basisplatte (12; 32) mit schlitzartigen Ausnehmungen (20) versehen ist, in die Vorsprünge der wenigstens einen Versteifungsrippe (16, 18; 36, 38) eingreifen.

## Claims

1. Cassette cover for a flush-mounted receptacle box or a flush-mounted pull box, where the cassette cover has a baseplate (12; 32) and where the baseplate (12; 32) of the cassette cover is provided with at least one stiffening rib (16, 18; 36; 38) on an underside facing the appliance insert or flush-mounted box, **characterized in that** the baseplate (12, 32) is provided with projections and/or recesses (20) engaging in matching recesses and/or projections of the at least one stiffening rib (16, 18; 36, 38).

2. Cassette cover according to Claim 1, **characterized in that** the least one stiffening rib (16, 18; 36, 38) is designed as a sheet metal part and is angled at its free edge facing away from the baseplate (12; 32).

3. Cassette cover according to one of the preceding claims, **characterized in that** at least two intersecting stiffening ribs (16, 18) are arranged on the underside of the baseplate (12).

4. Cassette cover according to one of the preceding claims, **characterized in that** at least two stiffening ribs (36, 38) aligned substantially parallel to one another are arranged on the underside of the baseplate (32).

5. Cassette cover according to Claim 4, **characterized in that** a flex outlet arranged between the two stiffening ribs (36, 38) aligned substantially parallel to one another is provided.

6. Cassette cover according to one of Claims 1 to 5, **characterized in that** the baseplate (12; 32) and the at least one stiffening rib (16, 18; 36, 38) are designed as sheet metal parts and the baseplate (12; 32) is provided with slot-like recesses (20) engaging the the projections of the at least one stiffening rib (16, 18; 36, 38).

## Revendications

1. Couvercle de cassette pour un coffret d'appareil encastré ou une boîte de tirage encastrée, sachant que couvercle de cassette présente une plaque de base (12 ; 32) et que la plaque de base (12 ; 32) du couvercle de cassette est munie d'au moins une nervure raidisseuse (16, 18 ; 36, 38) sur une face inférieure tournée vers le coffret d'appareil ou la boîte encastrée, **caractérisé en ce que** la plaque de base (12 ; 32) est munie de parties saillantes et/ou d'évidements qui s'engagent dans des évidements et/ou des parties saillantes correspondants de l'au moins une nervure raidisseuse (16, 18 ; 36, 38).

2. Couvercle de cassette selon la revendication 1, **caractérisé en ce que** l'au moins une nervure raidisseuse (16, 18 ; 36, 38) est formée par une pièce en tôle et est coudée sur son arête libre opposée à la plaque de base (12 ; 32).

3. Couvercle de cassette selon l'une des revendications précédentes, **caractérisé en ce qu'**au moins deux nervures raidisseuses (16, 18) se croisant sont disposées sur la face inférieure de la plaque de base (12).

4. Couvercle de cassette selon l'une des revendications précédentes, **caractérisé en ce qu'**au moins deux nervures raidisseuses (36, 38) sensiblement parallèles entre elles sont disposées sur la face inférieure de la plaque de base (32).

5. Couvercle de cassette selon la revendication 4, **caractérisé en ce qu'**est prévue une sortie de cordon qui est disposée entre les deux nervures raidisseuses (36, 38) sensiblement parallèles en elles.

6. Couvercle de cassette selon l'une des revendications 1 à 5, **caractérisé en ce que** la plaque de base (12 ; 32) et l'au moins une nervure raidisseuse (16, 18 ; 36, 38) sont formées par des pièces en tôle, et que la plaque de base (12 ; 32) est munie d'évidements en forme de fente (20) dans lesquels s'engagent les parties saillantes de l'au moins une nervure raidisseuse (16, 18 ; 36, 38).
